# DEMANDE DE BREVET EUROPEEN

(11) **EP 3 407 426 A1**
(43) Date de publication de la demande: **28.11.2018**
(21) Numéro de dépôt: 18167782.4
(22) Date de dépôt: 17.04.2018
(51) Int. Cl.: H01R 4/34, B60J 5/10, H01R 4/30

(54) **STRUCTURE DE VÉHICULE COMPORTANT UN MOYEN DE FIXATION D'UN LIEN ÉLECTRIQUEMENT CONDUCTEUR ET MOYEN DE FIXATION CORRESPONDANT**

(30) Priorité: 24.05.2017 FR 1754628
(71) Demandeur: PSA Automobiles SA, 78300 Poissy (FR)
(72) Inventeur: THIEBAULT, Ludovic, 70400 Couthenans (FR); MAZE, Xavier, 70400 Chagey (FR)

(57) **Abrégé**

L'invention concerne une structure de véhicule (1) comportant un premier élément métallique (11), un second élément non métallique (12), un lien électriquement conducteur (13) et des moyens de fixation (14, 15); un premier moyen de fixation (14) permettant de raccorder électriquement une première extrémité (131) du lien (13) au premier élément métallique (11) et un second moyen de fixation (15) permettant de solidariser une seconde extrémité (132) du lien (13) au second élément non métallique (15), caractérisée en ce que au moins un des deux moyens de fixation (14,15) comporte au moins deux parties (151, 152), lesdites deux parties (151, 152) étant adaptées pour enserrer entre elles l'extrémité correspondante (132) du lien (13) et en ce qu'au moins une des deux parties (151, 152) du moyen de fixation en au moins deux parties (15) comporte une échancrure (154) adaptée pour permettre le passage du lien (13) hors dudit moyen de fixation en au moins deux parties (15).

## Description

La présente invention concerne une structure de véhicule qui comporte un premier élément métallique, un second élément non métallique et un lien électriquement conducteur. Elle concerne plus particulièrement une telle structure qui comporte aussi des moyens de fixation ; un premier moyen de fixation permettant de raccorder électriquement une première extrémité du lien au premier élément métallique et un second moyen de fixation permettant de solidariser une seconde extrémité du lien au second élément non métallique.

Il est connu d'avoir un lien métallique, tel qu'un câble, qui soit connecté électriquement entre deux parties d'une structure d'un véhicule pour relier ces deux parties à une masse commune. Généralement un tel lien comporte à chacune de ces deux extrémités une cosse qui est vissée sur chacune des deux parties de la structure du véhicule. Le problème de tels connecteurs est que lors du vissage, les cosses ont tendances à être entrainés en rotation par la rotation des têtes des vis, risquant que ces cosses ne soient pas positionnées correctement dans l'alignement du lien. Dans le cas où la première partie non métallique est un ouvrant, un lien qui comporte de telles cosses non montées alignées, va exercer un effort de traction sur les cosses maies alignées à chaque manipulation de l'ouvrant, finissant pas casser au moins une des deux cosses ou par couper le lien à un des points de connections avec au moins une des deux cosses.

La présente invention a pour objectif de pallier ces problèmes et de proposer une structure de véhicule qui comporte un premier élément métallique, un second élément non métallique et un lien électriquement conducteur qui soit à la fois simple à mettre en place et qui permette d'avoir et de conserver un bon alignement entre le lien et les moyens de fixation sur les deux éléments et cela pour avoir une bonne durabilité dans le temps du lien.

Plus particulièrement, l'invention a pour objet une structure de véhicule qui comporte un premier élément métallique, un second élément non métallique, un lien électriquement conducteur et des moyens de fixation ; un premier moyen de fixation permettant de raccorder électriquement une première extrémité du lien au premier élément métallique et un second moyen de fixation permettant de solidariser une seconde extrémité du lien au second élément non métallique, telle que au moins un des deux moyens de fixation comporte au moins deux parties, les deux parties étant adaptées pour enserrer entre elles l'extrémité correspondante du lien et en ce qu'au moins une des deux parties du moyen de fixation en au moins deux parties comporte une échancrure adaptée pour permettre le passage du lien hors du moyen de fixation.

Selon une première caractéristique de l'invention, la première partie du moyen de fixation en au moins deux parties comporte une cuvette dans laquelle est positionnée l'extrémité correspondante du lien, la seconde partie présentant une forme complémentaire adaptée pour enserrer l'extrémité du lien. L'échancrure est formée le long de la paroi latérale de la première partie et débouche dans la cuvette.

Selon un mode de réalisation préférentiel, la première partie comporte au moins une deuxième échancrure adaptée pour permettre au moins un deuxième passage du lien hors du moyen de fixation en au moins deux parties.

Selon une deuxième caractéristique de l'invention, les deux parties du moyen de fixation sont solidarisées entre elles par des moyens d'assemblage tels que des moyens de vissage.

Selon une troisième caractéristique de l'invention, la cuvette présente une forme conique de révolution percée en son centre d'un trou taraudé, la seconde partie des moyens de fixation en au moins deux parties présentant une forme conique complémentaire prolongée en son centre d'une tige filetée adaptée pour être visée dans le trou taraudé, l'extrémité enserrée du lien formant une boucle positionnée en périphérie des moyens d'assemblage.

Toujours selon un mode de réalisation préférentiel, le premier élément métallique est formé par un encadrement métallique d'un ouvrant et le second élément non métallique est formé par l'ouvrant correspondant, l'ouvrant étant formé dans une matière plastique ou en matériau composite. Le lien est formé par une tresse métallique adaptée pour être suffisamment souple pour suivre le mouvement d'ouverture de l'ouvrant.

Selon une quatrième caractéristique de l'invention, le moyen de fixation en au moins deux parties est solidarisé sur l'ouvrant et adapté pour relier électriquement au lien au moins une masse d'un système électrique solidaire de l'ouvrant.

La présente invention concerne aussi un moyen de fixation adapté pour être solidarisé sur un élément d'une structure de véhicule selon l'une quelconque des revendications précédentes, tel qu'il comporte au moins deux parties adaptées pour enserrer entre elles une extrémité d'un lien électriquement conducteur et en ce qu'au moins une des deux parties comporte une échancrure adaptée pour permettre le passage du lien hors du moyen de fixation.

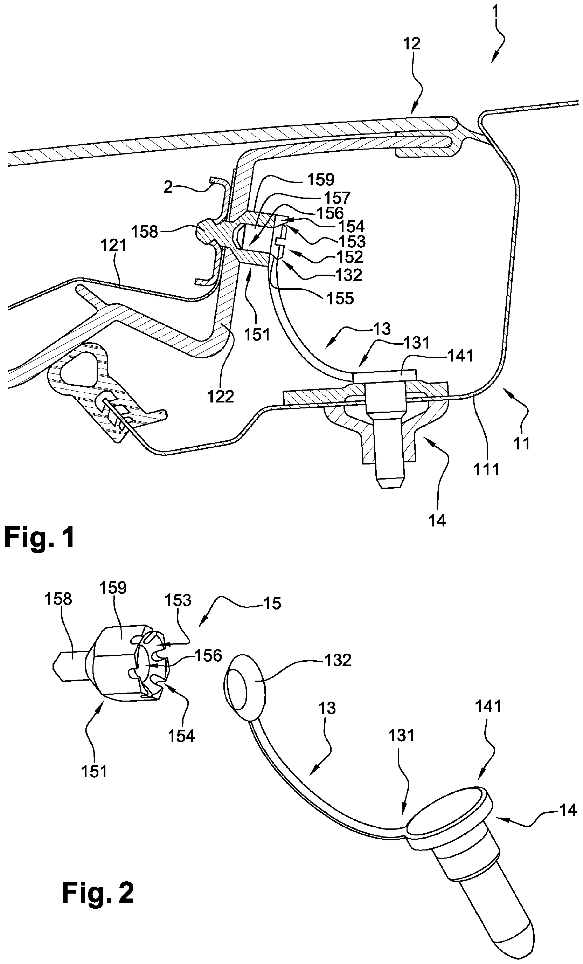

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
- Le figure 1 représente une partie d'une structure de véhicule comportant un premier élément métallique, un second élément non métallique et un lien électriquement conducteur ; et
- La figure 2 représente une vue éclatée d'une vis d'un premier moyen de fixation, du lien électriquement conducteur et d'une première partie d'un second moyen de fixation.

La figure 1 représente une partie d'une structure de véhicule 1 comportant un premier élément métallique 11, un second élément non métallique 12 et un lien électriquement conducteur 13. Dans l'exemple de mode de réalisation tel que représenté, le premier élément métallique 11 est formé par un encadrement métallique d'un ouvrant et le second élément non métallique 12 est formé par l'ouvrant correspondant. Un tel ouvrant non métallique 12 peut être formé dans une matière plastique ou en matériau composite. Un tel ouvrant 12 peut être, par exemple, un hayon d'un véhicule automobile. Une première extrémité 131 du lien 13 est raccordée électriquement à l'encadrement métallique 11 par l'intermédiaire d'un premier moyen de fixation 14. La seconde extrémité 132 du lien 13 est solidarisée sur l'ouvrant 12 par l'intermédiaire d'un second moyen de fixation 15. Le second moyen de fixation 15 permet de relier électriquement une masse 121 d'un dispositif électrique solidaire de l'ouvrant 12, au lien 13. Le second moyen de fixation 15 comporte deux parties adaptées pour enserrer entre elles la seconde extrémité 132 du lien 13. La première partie 151 du second moyen de fixation 15 comporte une cuvette 153 dans laquelle est positionnée la seconde extrémité 132 du lien 13. La seconde partie 152 du second moyen de fixation 15 présente une forme complémentaire adaptée pour enserrer la seconde extrémité 132 du lien 13 dans la cuvette 153 de première partie 151 du second moyen de fixation 15. Des échancrures 154 sont formées le long de la paroi latérale de la première partie 151 du second moyen de fixation 15. Les échancrures 154 débouchent dans la cuvette 153. Selon le mode de réalisation tel que représenté, la cuvette 153 présente une forme conique de révolution. La seconde partie 152 présente une forme conique complémentaire 155. La première partie 151 et le seconde partie 152 du second moyen de fixation 15 sont assemblées entre elles par vissage ; au centre de la cuvette conique 153 de la première partie 151 est formé un trou taraudé 156 dans lequel est vissé une tige filetée 157 qui prolonge la partie conique 155 de la seconde partie 152 du second moyen de fixation 15. Typiquement, la seconde partie 152 du second moyen de fixation 15 est formée par une vis qui comporte une tête conique 155. La seconde extrémité 132 du lien 13 est formée par une collerette conique qui est positionnée dans la cuvette 153 de la première partie 151 du second moyen de fixation 15 et bloquée en position contre la paroi latérale de la cuvette 153 par la tête conique 155 de la vis 152. Le second moyen de fixation 15 est solidarisé sur une paroi 122 de l'ouvrant 12 par vissage. Pour se faire, la première partie 151 du second moyen de fixation 15 comporte une tige filetée 158 positionnée dans l'alignement du trou taraudé 156. Une paroi latérale extérieure 159 de la première partie 151 du second moyen de fixation 15 présente une empreinte hexagonale adaptée pour collaborer avec un outil de vissage tel qu'une clef plate. Un écrou 2 est vissé à la tige filetée 158 de la première partie 151 du second moyen de fixation 15, de l'autre côté de la paroi 122 de l'ouvrant 12. La masse 121 du dispositif électrique solidaire de l'ouvrant 12 est formée par une tige plate dont l'extrémité est bloquée entre l'écrou 2 et la paroi 122 de l'ouvrant 12. La conductivité électrique de la masse 121 jusqu'au lien 13 se fait par l'intermédiaire de l'écrou 2 qui est vissé sur la première partie 151 du second moyen de fixation 15. La première extrémité 131 du lien 13 est solidaire d'une vis 141 du premier moyen de fixation 14. La vis 141 du premier moyen de fixation 14 est adaptée pour être positionné selon un unique mouvement de translation dans une ouverture formée dans une paroi métallique 111 de l'encadrement 11. La conductivité électrique est établie lors de ce positionnement du fait que l'ensemble des pièces constituant le premier moyen de fixation 14 sont en métal. Un tel positionnement est possible car, selon l'axe de translation, le premier moyen de fixation 14 n'a pas d'effort de serrage à fournir.

Le montage du lien 13 entre l'ouvrant 12 et l'encadrement métallique 11 se fait suivant les étapes de montage ci-dessous :
- une première étape qui consiste à visser la première partie 151 du second moyen de fixation 15 sur la paroi 122 de l'ouvrant 12. Lors de cette première partie du montage, la tige plate 121 de la masse du dispositif électrique est positionnée entre la paroi 122 de l'ouvrant 12 et l'écrou 2. Le vissage du second moyen de fixation et de l'écrou 2 se fait par l'intermédiaire de la forme hexagonale de la paroi latérale extérieure 159 de la première partie 151 du second moyen de fixation 15 ;
- une deuxième étape qui consiste à solidariser à l'encadrement métallique 11 la première extrémité 131 du lien 13 par l'intermédiaire d'un premier moyen de fixation 14. La vis 141 du premier moyen de fixation 14 est positionnée selon un unique mouvement de translation dans l'ouverture formée dans la paroi métallique 111 de l'encadrement 11. Durant cette étape, il est important de correctement orienter la vis 141 du premier moyen de fixation 14 pour avoir le lien 13 orienté vers le second moyen de fixation 15 ; et
- une troisième et dernière étape qui consiste à positionner la seconde extrémité 132 du lien 13 dans la cuvette conique 153 de la première partie 151 du second moyen de fixation 15, en veillant à bien passer le lien 13 dans l'échancrure 154 la plus adaptée et à visser la seconde partie 152 du second moyen de fixation 15 pour bloquer en position la seconde extrémité 132 du lien 13, assurant la conductivité électrique entre la tige plate 121 de la masse du dispositif électrique et l'encadrement métallique 11.

La figure 2 représente une vue éclatée de la vis 141 du premier moyen de fixation, tel que non encore positionnée sur la paroi de l'encadrement métallique, du lien 13 et de la première partie 151 du second moyen de fixation 15 tel que non encore positionné sur la paroi de l'ouvrant. Sur cette figure sont plus particulièrement visibles ; les encoches 154 formées le long de la paroi latérale de la cuvette 153, le trou taraudé 156 pour le montage de la seconde partie du second moyen de fixation 15, la forme hexagonale de la paroi latérale extérieure 159 de la première partie 151 du second moyen de fixation 15 et la tige filetée 158 qui prolonge la paroi latérale extérieure hexagonale 159 de la première partie 151. Sur cette figure est aussi plus particulièrement visible la forme en collerette de la seconde extrémité 132 du lien 13 qui est destinée à être enserrer entre la première 151 et la seconde parties du second moyen de fixation 15. Du fait du nombre d'encoches 154 et cela en fonction du positionnement angulaire de la première parties 151 du second moyen de fixation 15 sur la paroi de l'ouvrant, il est toujours possible d'en choisir l'encoche la plus adaptée pour le passage du lien 13 pour avoir un bon alignement du lien 13 entre les deux moyens de fixation, assurant ainsi un positionnement de travail favorable au lien 13 pour lui assurer une bonne tenue dans le temps.

## Revendications

1. Structure de véhicule (1) comportant un premier élément métallique (11), un second élément non métallique (12), un lien électriquement conducteur (13) et des moyens de fixation (14, 15); un premier moyen de fixation (14) permettant de raccorder électriquement une première extrémité (131) du lien (13) au premier élément métallique (11) et un second moyen de fixation (15) permettant de solidariser une seconde extrémité (132) du lien (13) au second élément non métallique (15), **caractérisée en ce qu'**au moins un des deux moyens de fixation (14,15) comporte au moins deux parties (151, 152), lesdites deux parties (151, 152) étant adaptées pour enserrer entre elles l'extrémité correspondante (132) du lien (13) et **en ce qu'**au moins une des deux parties (151, 152) du moyen de fixation en au moins deux parties (15) comporte une échancrure (154) adaptée pour permettre le passage du lien (13) hors dudit moyen de fixation en au moins deux parties (15).

2. Structure de véhicule (1) selon la revendication 1, **caractérisée en ce qu'**une première partie (151) du moyen de fixation en au moins deux parties (15) comporte une cuvette (153) dans laquelle est positionnée l'extrémité correspondante (132) du lien (13), la seconde partie (152) présentant une forme complémentaire adaptée pour enserrer ladite extrémité (132) du lien (13).

3. Structure de véhicule (1) selon la revendication 2, **caractérisée en ce que** l'échancrure (154) est formée le long de la paroi latérale de ladite première partie (151), ladite échancrure (154) débouchant dans la cuvette (153).

4. Structure de véhicule selon la revendication 3, **caractérisée en ce que** ladite première partie (151) comporte au moins une deuxième échancrure (154) adaptée pour permettre au moins un deuxième passage du lien (13) hors dudit moyen de fixation en au moins deux parties (15).

5. Structure de véhicule selon l'un quelconque des revendications 2 à 4, **caractérisée en ce que** les deux parties (151, 152) du moyen de fixation (15) sont solidarisées entre elles par des moyens d'assemblage tels que des moyens de vissage (156, 157).

6. Structure de véhicule (1) selon la revendication 5, **caractérisée en ce que** la cuvette (153) présente une forme conique de révolution percée en son centre d'un trou taraudé (156), la seconde partie (152) des moyens de fixation en au moins deux parties (15) présentant une forme conique complémentaire prolongée en son centre d'une tige filetée (157) adaptée pour être visée dans le trou taraudé (156), l'extrémité enserrée (132) du lien (13) formant une boucle positionnée en périphérie desdits moyens d'assemblage (156, 157).

7. Structure de véhicule (1) selon l'une quelconque des revendications précédentes, **caractérisée en ce que** le premier élément métallique (11) est formé par un encadrement métallique d'un ouvrant et le second élément non métallique (12) est formé par l'ouvrant correspondant, ledit ouvrant (12) étant formé dans une matière plastique ou en matériau composite.

8. Structure de véhicule (1) selon la revendication précédente, **caractérisé en ce que** le moyen de fixation en au moins deux parties (15) est solidarisé sur l'ouvrant (12) et est adapté pour relier électriquement à l'encadrement métallique (11), par l'intermédiaire du lien (13), au moins un troisième élément (121) solidaire de l'ouvrant (12).

9. Structure de véhicule (1) selon la revendication précédente, **caractérisée en ce que** le lien (13) est formé par une tresse métallique adaptée pour être suffisamment souple pour suivre le mouvement d'ouverture de l'ouvrant (12).

10. Moyen de fixation (15) adapté pour être solidarisé sur un élément (11, 12) d'une structure de véhicule (1) selon l'une quelconque des revendications précédentes, **caractérisé en ce qu'**il comporte au moins deux parties (151, 152) adaptées pour enserrer entre elles une extrémité (132) d'un lien électriquement conducteur (13) et **en ce qu'**au moins une des deux parties comporte (151)une échancrure (154) adaptée pour permettre le passage du lien (13) hors dudit moyen de fixation (15).
